# EUROPÄISCHE PATENTSCHRIFT

(11) **EP 1 619 366 B1**
(45) Veröffentlichungstag und Bekanntmachung des Hinweises auf die Patenterteilung: **23.06.2010**
(21) Anmeldenummer: 05014343.7
(22) Anmeldetag: 01.07.2005
(51) Int. Cl.: F02B 37/007, F02B 37/18, F02B 37/013

(54) **Schaltung einer Registeraufladung**
Switching a multi-stage turbocompressor
Commutation d'un turbocompresseur à plusieurs étages

(30) Priorität: 21.07.2004 DE 102004035324
(43) Veröffentlichungstag der Anmeldung: 25.01.2006
(73) Patentinhaber: Bayerische Motoren Werke Aktiengesellschaft, 80809 München (DE)
(72) Erfinder: Reulein, Claus, Dr., 80333 München (DE); Dusel, Kurt, 80939 München (DE); Tribulowski, Jan, Dr., 85283 Wolnzach (DE)

(56) Entgegenhaltungen:
- EP-A- 0 326 167
- EP-A- 0 735 253
- WO-A-2004/046519
- DE-A1- 4 330 525
- DE-A1- 19 835 594
- US-A1- 2003 192 313

## Beschreibung

Die vorliegende Erfindung betrifft einen Verbrennungsmotor mit den Merkmalen aus dem Oberbegriff des Patentanspruchs 1.

Die Erfindung geht von der europäischen Patent EP-A-0 735 253 aus. Aus dieser ist ein Verbrennungsmotor mit mehreren Zylindern, deren Abgase mit Krümmern zu mindestens zwei Abgasgruppen zusammenfassbar sind, bekannt. Die Abgasgruppen sind durch eine Krümmerverbindung miteinander verbunden. Weiter sind zwei Abgasturbolader vorgesehen, wobei ein Abgasturbolader durch ein Absperrmittel abschaltbar ist, wobei das Absperrmittel zwischen der Krümmerverbindung und einem Abgasturbolader angeordnet ist.

Dieser Motor hat jedoch den Nachteil, dass er gewisse Totzeiten beim Umschalten von einem auf zwei Lader aufweist. Die permanente Verbindung zwischen den beiden Abgasgruppen wirkt sich des weiteren negativ auf den Ladungswechsel von dem Ein- auf den Zweiladerbetrieb aus. Die Motoren werden empfindlicher und haben eine geringere Leistung und einen höheren Kraftstoffverbrauch.

Es war deshalb die Aufgabe der vorliegenden Erfindung einen Verbrennungsmotor zur Verfügung zu stellen, der die Nachteile des Standes der Technik nicht aufweist.

Gelöst wird die Aufgabe durch einen Verbrennungsmotor gemäß Anspruch 1. Eine bevorzugte Ausführungsform des erfindungsgemäßen Verbrennungsmotors wird mit Patentanspruch 2 beansprucht.

Verbrennungsmotoren mit mehreren Zylindern werden heutzutage oftmals mit zwei Abgasturboladern betrieben, wobei jeweils die Abgase der einen Hälfte der Zylinder zu einer ersten Abgasgruppe zusammengefasst und dem einen Abgasturbolader und die Abgase der anderen Hälfte der Zylinder zu einer zweiten Abgasgruppe zusammengefasst werden, die zu dem anderen Abgasturbolader geleitet werden. Ein derartiger Motor wurde beispielsweise von der Firma Porsche AG hergestellt. Bei diesem Motor sind die Abgasgruppen permanent durch eine Krümmerverbindung miteinander verbunden. Einer der beiden Abgasturbolader ist durch eine Klappe abschaltbar, die in dem Abgasrohr, das von dem jeweiligen Abgasturbolader wegführt, angeordnet ist. Dieser Motor hat jedoch den Nachteil, dass er gewisse Totzeiten beim Umschalten von einem auf zwei Lader aufweist. Die permanente Verbindung zwischen den beiden Abgasgruppen wirkt sich des weiteren negativ auf den Ladungswechsel von dem Ein- auf den Zweiladerbetrieb aus. Die Motoren werden empfindlicher und haben eine geringere Leistung und einen höheren Kraftstoffverbrauch.

Es war deshalb die Aufgabe der vorliegenden Erfindung einen Verbrennungsmotor zur Verfügung zustellen, der die Nachteile des Standes der Technik nicht aufweist.

Gelöst wird die Aufgabe durch einen Verbrennungsmotor gemäß Patentanspruch 1, bevorzugte Ausführungsform des erfindungsgemäßen Verbrennungsmotors sind im Anspruch 2 beansprucht.

Der erfindungsgemäße Motor hat den Vorteil, dass durch das Absperrmittel, vorzugsweise eine Absperrklappe, die Verbindung zwischen den Abgasgruppen geschlossen werden kann, so dass eine Trennung zwischen den beiden Abgasgruppen möglich ist, was Vorteile beim Restgasgehalt, der Klopfneigung und des Kraftstoffbedarfs zur Folge hat. Durch einen gezielten Leckagestrom in des Absperrmittels wird auch beim Betrieb lediglich eines Abgasturboladers wird der andere Abgasturbolader permanent angetrieben, was dessen Verschleiß und dessen Ansprechzeit senkt.

Erfindungsgemäß weist der Verbrennungsmotor Stellorgane auf, die so einstellbar sind, dass auch an der Luftseite des abgeschalteten Abgasturboladers immer Ladedruck anliegt. Die Erfindung hat den Vorteil, dass bei einer Wiederinbetriebnahme des abgeschalteten Abgasturboladers dessen Anspringverhalten erheblich reduziert werden kann. Weiterhin bevorzugt ist, dass Absperrmittel so ausgeführt, dass es nicht vollständig abdichtet.

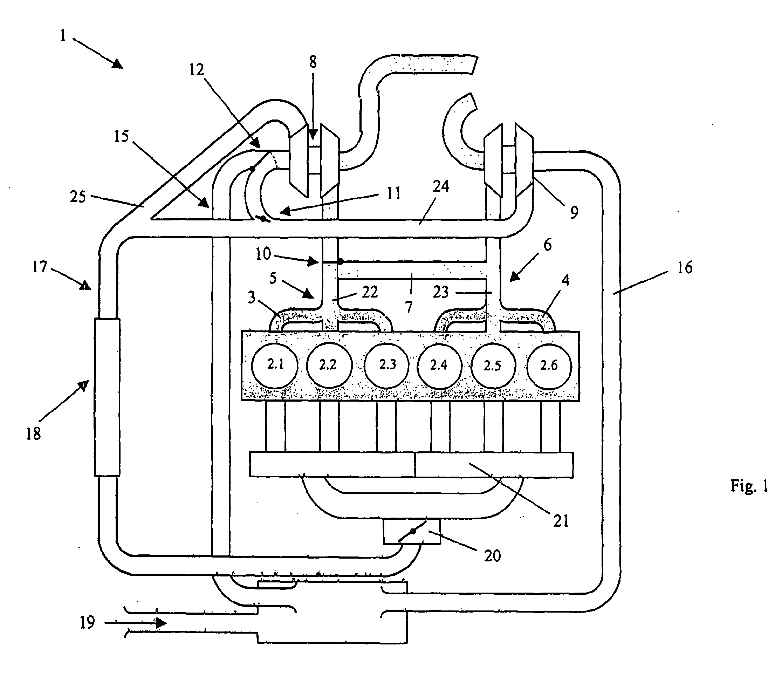

Im folgenden wird die Erfindung anhand der Figur 1 erläutert. Diese Erläuterungen sind lediglich beispielhaft und schränken den allgemeinen Erfindungsgedanken nicht ein.

In **Figur 1** ist der erfindungsgemäße Verbrennungsmotor als 6-Zylinder-Motor 1 dargestellt, der die Zylinder 2.1 bis 2.6 aufweist. Die Abgase der Zylinder 2.1 bis 2.3 werden in dem Krümmer 3 zu der ersten Abgasgruppe 5 zusammengefaßt. Die Abgase der Zylinder 2.4 bis 2.6 werden mit dem Krümmer 4 zu der zweiten Abgasgruppe 6 zusammengefaßt. Die Abgase der Abgasgruppe 5 werden mit der Rohrleitung 22 zu dem Abgasturbolader 8 geleitet, in dem sie eine Turbine antreiben, die Frischluft, die über die Rohleitung 15 angesaugt wird, verdichtet. Die Abgasströme 6 werden über die Rohrleitung 23 zu dem Abgasturbolader 9 geleitet, den sie ebenfalls antreiben, so dass Frischluft, die über die Leitung 16 angesaugt wird, verdichtet wird. Die durch die beiden Abgasturbolader verdichtete Frischluft strömt durch die Leitungen 24 bzw. 25 und wird in der Leitung 17 zusammengefaßt, über einen Ladekühler 18 geleitet und durchströmt dann eine Drosselklappe 20, mit der der Volumenstrom der in den Verbrennungsmotor geförderten Frischluft geregelt wird. Die Frischluft wird dann in dem Verteiler 21 auf die 6 Zylinder verteilt. Die Abgasströme 5, 6 durchströmen nach den Abgasturboladern jeweils einen Vorkatalysator 13 und den Hauptkatalysator 14 und verlassen dann den Auspuff.

Fällt im unteren oder mittleren Lastbereich des Motors nicht mehr soviel Abgas an, dass die beiden Abgasturbolader hinreichend effizient arbeiten, wird die Klappe 10 in der Rohrleitung 22 geschlossen, so dass das Abgas der Abgasgruppe 5 über die Leitung 7 zu dem Abgasturbolader 9 geleitet wird. Dadurch erhält der Abgasturbolader 9 soviel Abgas, dass er zumindest in der Nähe seines optimalen Arbeitspunktes arbeitet. Die verdichtete Luft wird dann wie oben beschrieben über die Leitungen 24 und 17 zu den Zylindern geleitet. Zur Reduzierung des Ansprechverhaltens des Abgasturboladers 8 bei dessen Wiederinbetriebnahme ist es vorteilhaft, wenn ein kleiner Leckagestrom die Klappe 10 passiert und die Turbine des Abgasturboladers 8 auf Drehzahl hält, ohne dass Frischluft gefördert wird. In der Leitung 24 befindet sich ein Ventil 11 und in der Leitung 15 eine Rückschlagklappe 12. Im Teillastbereich; d.h. wenn die Klappe 10 geschlossen ist, wird das Ventil 11 zumindest teilweise geöffnet, so dass der Druck, der in Leitung 24 anliegt im wesentlichen auch hinter dem Ventil 11 herrscht. Die Rückschlagklappe 12 wird dadurch in die in der Figur 1 dargestellte Position gedrückt, so dass die Saugseite des Abgasturboladers 8 von der Frischluftzufuhr in Leitung 15 abgetrennt ist. Durch die Öffnung des Ventils 11 und durch die Rückschlagklappe 12 liegt an der Saugseite des Abgasturboladers Ladedruck an, so dass dieser sobald die Klappe 10 wieder geöffnet wird, nur eine sehr kurze oder gar keine Ansprechzeit benötigt um den gewünschten Ladedruck zur Verfügung zustellen. Sobald wieder so viele Zylinder sich im Einsatz befinden bzw. die Lastanforderung ausreichend hoch ist, dass beide Abgasturbolader hinreichend gut arbeiten, wird die Klappe 10 geöffnet und das Ventil 11 geschlossen. Dadurch fällt die Rückschlagklappe 12 nach unten und der Abgasturbolader 8 kann auf der Saugseite Frischluft anziehen und diese Verdichten.

### Bezugszeichenliste:

- 1: Verbrennungsmotor
- 2.1 bis 2.8: Zylinder
- 3,4: Krümmer
- 5, 6: Abgasströme
- 7: Verbindungsleitung
- 8: erster Abgasturbolader
- 9: zweiter Abgasturbolader
- 10: Klappe
- 11: Ventil
- 12: Rückschlagklappe
- 13: Vorkatalysator
- 14: Hauptkatalysator
- 15, 16: Frischluftzuleitung
- 17: Druckleitung der Frischleitung nach den Abgasturboladern
- 18: Ladeluftkühler
- 19: Frischluft
- 20: Drosselklappe
- 21: Frischluftverteiler
- 22, 23: Rohrleitung
- 24: Rohrleitung
- 25: Rohrleitung

## Patentansprüche

1. Ein Verbrennungsmotor (1) mit mehreren Zylindern (2), deren Abgase mit Krümmern (3, 4) zu mindestens zwei Abgasgruppen (5, 6) zusammenfassbar sind, wobei die Abgasgruppen (5, 6) durch eine Krümmerverbindung (7) verbunden sind und mit zwei Abgasturboladern (8, 9), wobei ein Abgasturbolader (8, 9) durch ein Absperrmittel (10) abschaltbar ist, wobei das Absperrmittel (10) zwischen der Krümmerverbindung und einem Abgasturbolader (8, 9) angeordnet ist, **dadurch gekennzeichnet, dass** der Verbrennungsmotor (1) Stellorgane (11, 12) aufweist, die so einstellbar sind, dass an der Luftseite des abgeschalteten Abgasturboladers (8) Ladedruck anliegt, wobei das erste Stellorgan (12) eine in einer Frischluftzuleitung (15) des abschaltbaren Abgasturboladers (8) angeordnete Rückschlagklappe ist und wobei eine Druckluftleitung (24) des dauerhaft zugeschalteten Abgasturboladers (9) durch eine weitere Rohrleitung mit der Frischluftzuleitung (15) des abschaltbaren Abgasturboladers (8) verbunden ist, wobei die weitere Rohrleitung zwischen dem ersten Stellorgan (12) und dem abschaltbaren Abgasturbolader (8) in die Frischluftzuleitung (15) mündet und wobei das zweite Stellorgan (11) ein Ventil ist, das in der weiteren Rohrleitung des dauerhaft zugeschalteten Abgasturboladers (9) angeordnet ist.

2. Verbrennungsmotor nach Patentanspruch 1,
**dadurch gekennzeichnet, dass** das Absperrmittel (10) nicht vollständig abdichtet.

## Claims

1. An internal combustion engine (1) comprising a number of cylinders (2) from which the exhaust gases, via bends or manifolds (3, 4), are collectable in at least two groups of exhaust pipes (5, 6), wherein the groups of exhaust pipes (5, 6) are connected by a manifold connection (7), the engine also comprising two turbochargers (8, 9), wherein one turbocharger (8, 9) can be shut off by a shut-off means (10), wherein the shut-off means (10) is disposed between the manifold connection and a turbocharger (8, 9), **characterised in that** the engine (1) has adjusting means (11, 12) which are adjustable so that the air side of the shut-off turbocharger (8) is at the boost pressure, wherein the first adjusting means (12) is a non-return valve disposed in a fresh-air line (15) to the turbocharger (8) which can be shut-off and wherein a compressed-air line (24) to the permanently connected turbocharger (9) is connected by an additional pipe to the fresh-air line (15) of the turbocharger (8) which can be shut-off, wherein the additional pipe opens into the fresh-air line (15) between the first adjusting means (12) and the turbocharger (8) which can be shut-off and wherein the second adjusting means (11) is a valve disposed in the additional pipe to the permanently connected turbocharger (9).

2. An engine according to claim 1, **characterised in that** the shut-off means (10) is not completely sealing-tight.

## Revendications

1. Moteur à combustion (1) à plusieurs cylindres (2) dont les gaz d'échappements sont regroupés par des collecteurs (3, 4) en au moins deux groupes de gaz d'échappements (5, 6),
- les groupes de gaz d'échappements (5, 6) étant reliés par une liaison par collecteur (7) et à deux turbocompresseurs de gaz d'échappements (8, 9),
- un turbocompresseur de gaz d'échappements (8, 9) pouvant être coupé par un moyen d'arrêt (10),
- le moyen d'arrêt (10) étant installé entre la liaison par collecteur et un turbocompresseur de gaz d'échappements (8, 9),
**caractérisé en ce que**
le moteur à combustion (1) comporte des actionneurs (11, 12) réglables de façon à disposer d'une pression d'alimentation sur le côté air du turbocompresseur de gaz d'échappements (8) qui a été coupé,
* le premier organe d'actionnement (12) étant un volet anti-retour installé dans une conduite d'alimentation en air frais (15) du turbocompresseur de gaz d'échappements (8) qui peut être coupé, et
* une conduite d'air comprimé (24) du turbocompresseur (9) de gaz d'échappements, branchée de manière permanente, est reliée par une autre conduite à la conduite en air frais (15) du turbocompresseur de gaz d'échappements (8) qui peut être coupé,
* l'autre conduite entre le premier organe d'actionnement (12) et le turbocompresseur de gaz d'échappements (8) qui peut être coupé, débouche dans la conduite d'alimentation en air frais (15), et
* le second organe d'actionnement (11) est une vanne installée dans la suite de la conduite du turbocompresseur de gaz d'échappements (9) branché en permanence.

2. Moteur à combustion selon la revendication 1,
**caractérisé en ce que**
le moyen d'arrêt (10) n'assure pas une étanchéité totale.
